# EUROPÄISCHE PATENTSCHRIFT

(11) **EP 0 486 742 B1**
(45) Veröffentlichungstag und Bekanntmachung des Hinweises auf die Patenterteilung: **17.08.1994**
(21) Anmeldenummer: 90810899.6
(22) Anmeldetag: 21.11.1990
(51) Int. Cl.: G01C 17/04, G01C 17/06

(54) **Magnetkompass**
Magnetic compass
Boussole magnétique

(43) Veröffentlichungstag der Anmeldung: 27.05.1992
(73) Patentinhaber: Stolz, Patrick, CH-2502 Bienne (CH)
(72) Erfinder: Stolz, Patrick, CH-2502 Bienne (CH)
(74) Vertreter: AMMANN PATENTANWAELTE AG BERN

(56) Entgegenhaltungen:
- EP-A- 0 181 834
- DE-A- 2 028 114

## Beschreibung

Die vorliegende Erfindung bezieht sich auf einen Magnetkompass, der ein Gehäuse und ein bewegliches Teil, an dem mindestens eine Zeigeranordnung angebracht ist, aufweist, wobei zwischen dem Gehäuse und dem beweglichen Teil Kugeln angeordnet sind. Ein solcher Magnetkompass, beziehungsweise Magnetkompass-Körper, ist aus der EP-A-181834 bekannt, wobei diese Ausführungsform als eine der vielen möglichen Varianten in Figur 9 aufgeführt ist und der bewegliche Teil, beziehungsweise Lageranordnung, auf einem im Gehäuseboden befestigten Lagerstift aufgehängt ist. Dabei wird in dieser Variante die bewegliche Lageranordnung durch ein Kugelbett geführt.

Es ist davon ausgehend Aufgabe der vorliegenden Erfindung einen Magnetkompass anzugeben, bei welchem die Notwendigkeit entfällt, einen Lagerstift zu verwenden und der mindestens so präzise ist und einfach herstellbar ist. Diese Aufgabe wird mit einem im Anspruch 1 definierten Magnetkompass gelöst.

Es ist eine Aufgabe einer Weiterbildung der vorliegenden Erfindung einen Kompass anzugeben, der von beiden Seiten ablesbar ist. Diese Aufgabe wird mit den Merkmalen von Anspruch 2 gelöst.

Die Erfindung wird im folgenden anhand einer Zeichnung von Ausführungsbeispielen näher erläutert.
Figur 1 zeigt in Draufsicht ein erstes Ausführungsbeispiel eines von zwei Seiten ablesbaren Magnetkompasses ohne Abdeckgläser,
Figur 2 zeigt einen Schnitt gemäss der Linie II-II in Figur 1,
Figur 3 zeigt einen Schnitt gemäss der Linie III-III und
Figur 4 zeigt einen Schnitt gemäss der Linie IV-IV in Figur 2,
Figur 5 zeigt eine Ausführungsvariante zum Kompass gemäss Figur 1,
Figur 6 zeigt als zweites Ausführungsbeipiel einen von einer Seite ablesbaren Kompass, und
Figur 7 zeigt einen Schnitt gemäss der Linie VII-VII in Figur 6.

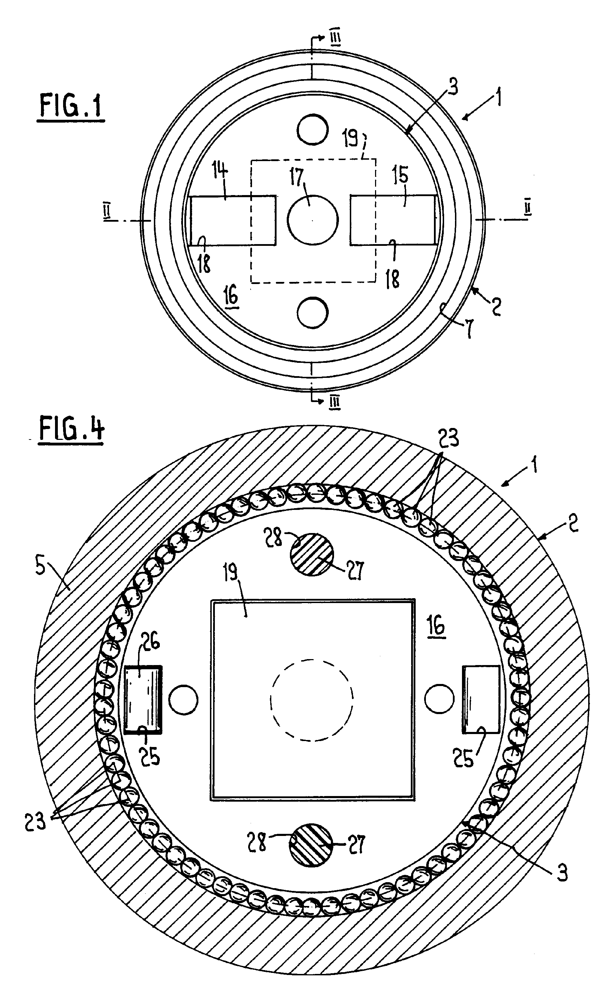

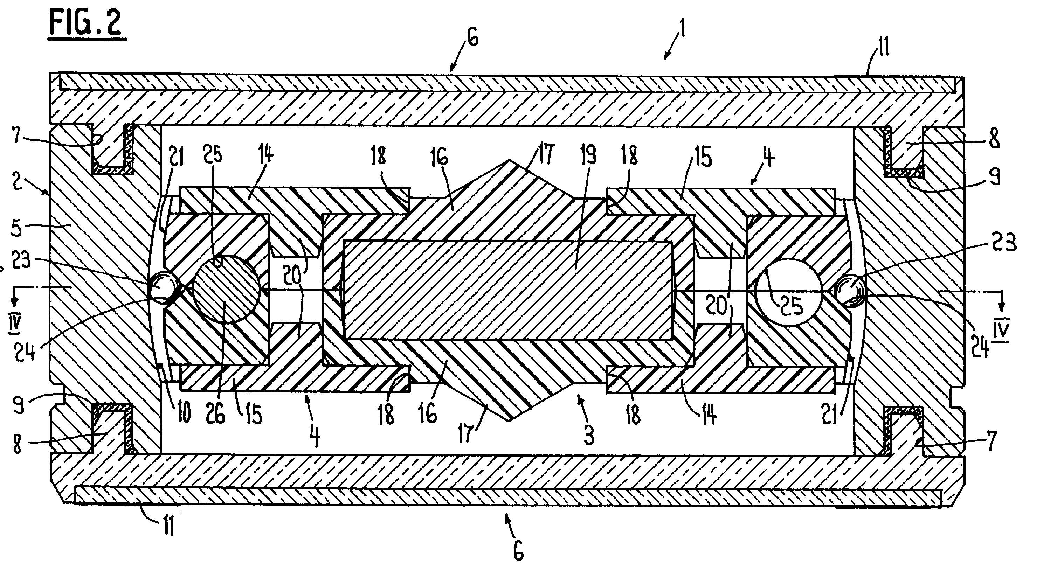

Die Figuren 1 - 4 zeigen einen doppelseitigen Magnetkompass einfachster Bauart mit einem spiegelsymmetrischen Aufbau. In den beiden Schnittfiguren 2 und 3 erkennt man, dass der Magnetkompass 1 aus dem Gehäuse 2, dem beweglichen Teil 3 sowie der beidseitig angeordneten Zeigeranordnung 4 besteht. Das Gehäuse 2 besteht im wesentlichen aus dem ringförmigen Seitenteil 5 sowie den beiden durchsichtigen Deckteilen 6, in denen die feste Skala 11 eingelassen ist. Das ringförmige Seitenteil 5 weist an seinen Oberflächen eine Nut 7 auf, in die je eine ringförmige Rippe 8 an den Deckseiten 6 passt, wobei die Deckseiten mittels einem geeigneten Klebstoff 9 im Seitenteil befestigt sind. Die Innenseite 10 des ringförmigen Seitenteils ist konkav ausgebildet und poliert, um ein störungsfreies Abrollen der Kugeln 23 darauf zu gewährleisten. In Figur 2 ist die feste Skala 11 angedeutet, die mit den beiden Zeigern 14 und 15 zusammenarbeitet.

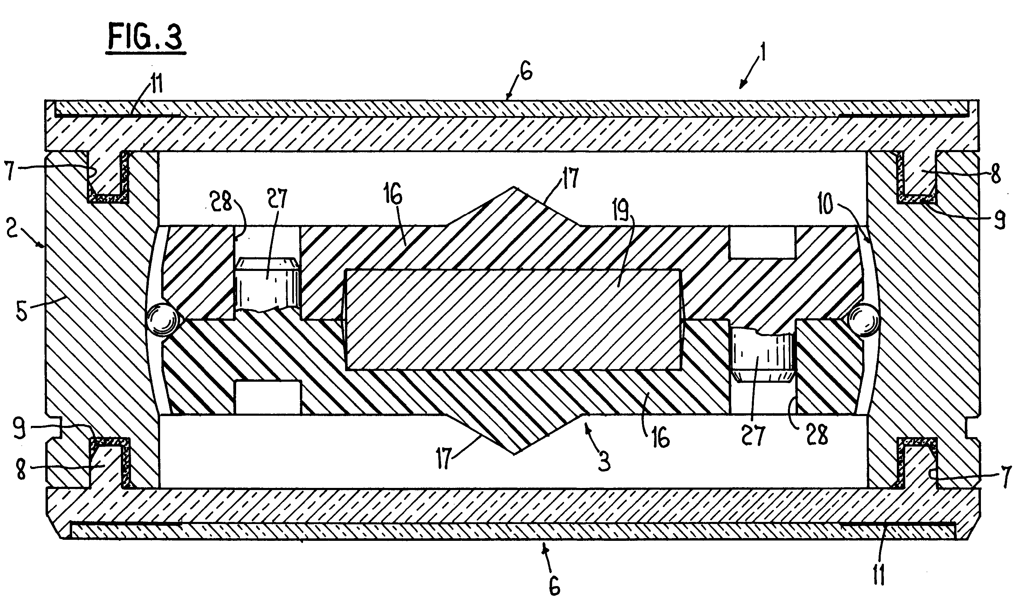

Das bewegliche Teil 3 ist aus jeweils zwei identischen Teilen aufgebaut und enthält ein scheibenförmiges Magnetgehäuse 16, das an seiner Oberfläche eine konische Erhebung 17 aufweist, deren Spitze den Mittelpunkt der Zeigeranordnung darstellt und zwei rechteckige Ausschnitte 18 aufweist, in denen die Zeiger 14 und 15 eingelassen sind. Das Magnetgehäuse 16 dient der Aufnahme eines Magneten 19, der aus einer Seltenerden-Kobalt-, insbesondere aus einer Samarium-Kobalt-Legierung besteht, oder ein metallisches Glas ist. Es kann aber auch eine andere, geeignete magnetische Substanz verwendet werden, die entweder quaderförmig sein kann oder irgend eine andere Gestalt aufweisen kann. Die beiden Zeiger 14 und 15 weisen je einen Zapfen 20 auf, der in einer entsprechenden Bohrung im Magnetgehäuse eingelassen ist. Die Stirnseite 21 des Magnetgehäuses ist nach aussen gewölbt und bildet mit der Innenfläche 10 einen Zwischenraum 22. Zur Mitte hin weist die gewölbte Fläche 21 eine Abschrägung 24 auf, derart, dass eine V-förmige Nut 24 entsteht, welche die andere Lauffläche des Kugelkranzes bildet und die Kugeln hält. Wie insbesondere aus den Figuren 2 und 3 hervorgeht, besteht das scheibenförmige Magnetgehäuse aus zwei identischen Teilen und weist ferner zwei Ausnehmungen 25 zur Aufnahme eines Gewichtsausgleichs-Zylinders 26 auf, der beispielsweise aus Messing gearbeitet sein kann, siehe Figur 2. In Figur 3, der einen zu Figur 2 senkrechten Schnitt zeigt, erkennt man zwei Zentrierzapfen 27, die in einer entsprechenden Bohrung 28 im Magnetgehäuse befestigt sind. Als Material für das Magnetgehäuse sowie das ringförmige Seitenteil kommt vor allem ein geeigneter, harter Kunststoff in Frage, der die erforderlichen glatten Laufflächen ermöglicht. Die durchsichtigen Deckseiten werden auch zweckmässigerweise aus Kunststoff gefertigt.

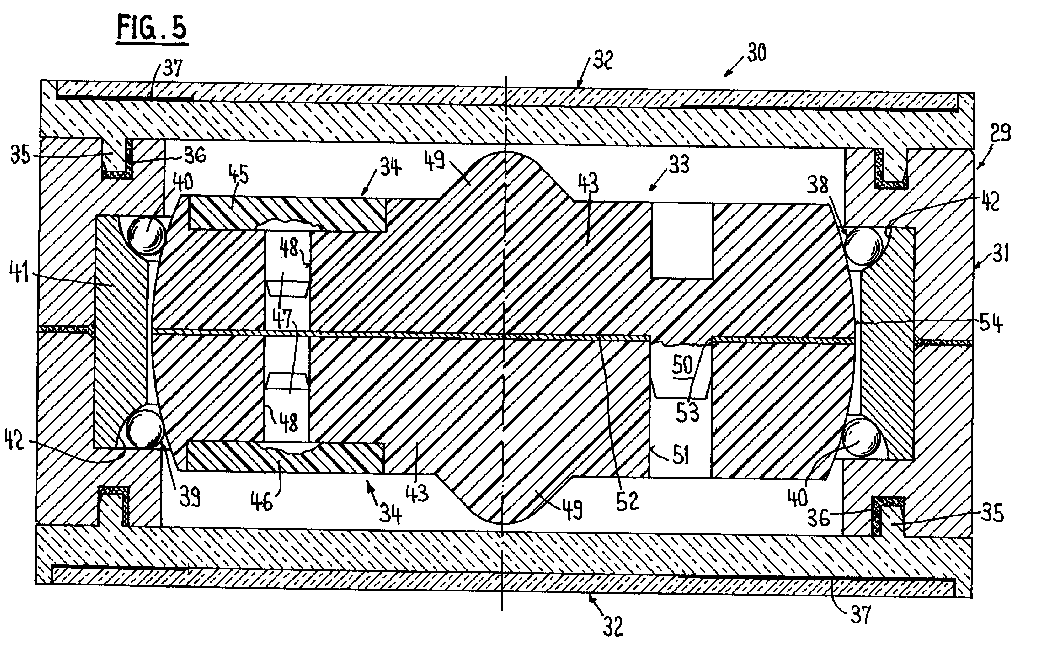

In Figur 5 ist eine Ausführungsvariante zum doppelseitigen Magnetkompass eingezeichnet, wobei es sich um zwei Schnitte in einer Figur vereint handelt, analog den Figuren 2 und 3 des ersten Ausführungsbeispiels. Das Gehäuse 29 von Magnetkompass 30 besteht auch in dieser Ausführungsvariante aus einem ringförmigen Seitenteil 31, zwei durchsichtigen Deckseiten 32 und dem beweglichen Teil 33 mit der Zeigeranordung 34. Der ganze Magnetkompass-Körper ist ebenfalls symmetrisch aufgebaut und die umlaufenden Rippen 35 in den Deckseiten sind in entsprechende Nuten 36 im Seitenteil 31 mittels Klebstoff eingepasst und befestigt. Auf den durchsichtigen Deckteilen ist ebenfalls die feste Skala 37 angeordnet. In Abweichung vom vorhergehenden Ausführungsbeispiel ist das ringförmige Seitenteil ebenfalls zweiteilig ausgeführt und miteinander verklebt.

Das bewegliche Teil 33 wird in dieser Ausführungsvariante durch zwei Kugelkränze 38 und 39 gehalten, wobei die Kugeln 40 hier ebenfalls aus einem amagnetischen Material bestehen. Ein derartiges Material ist unter dem Handelsnamen Arkap bekannt und die Kugeln weisen beispielsweise einen Durchmesser von 1 mm auf. Die Kugeln sind aussen von einem Doppelkäfig-Ring 41 gehalten, der im ringförmigen Seitenteil 31 eingelassen ist, und dessen beide nach innen weisenden Kanten 42 bogenförmig ausgebildet sind, derart, dass die Kugeln frei beweglich, jedoch ohne Spiel gehalten sind.

Das bewegliche Teil 33 besteht aus zwei identischen Scheibenhälften 43, auf denen die Zeiger 45 und 46 angeordnet, beziehungsweise eingelassen sind, wobei diese Zeiger mittels Zapfen 47 in entsprechende Bohrungen 48 gesteckt werden können. Die Scheibenhälften 43 und 44 dieses beweglichen Teils weisen in ihrer Mitte eine konische Erhebung 49 auf und sind über Zentrierzapfen 50 miteinander verbunden, die in entsprechende Bohrungen 51 eingepasst sind.

In dieser Ausführungsvariante ist die magnetische Substanz nicht quaderförmig ausgebildet wie in der vorhergehenden Ausführungsvariante, sondern als flache Magnetscheibe 52, die beispielsweise durch Aufdampfen und anschliessendes Ausrichten hergestellt werden kann. Diese Scheibe besitzt an der Stelle der Zentrierzapfen 50 entsprechende Durchbrechungen 53. Eine solche Magnetscheibe kann auch beim ersten Ausführungsbeispiel gemäss den Figuren 1 bis 4 Verwendung finden. Die Aussenkante 54 der Scheibenhälften ist konvex ausgebildet und dessen Oberfläche derart beschaffen, dass die Kugeln 40 mühelos darauf abrollen können.

Während sich in beiden Ausführungsformen das bewegliche Teil als relativ flache Scheibe darstellt, ist es möglich, diesen kugelförmig zu gestalten, wodurch auch eine räumliche Ausrichtung desselben, beispielsweise auf den Polarstern, möglich wird. Auch die zweite Ausführungsvariante ist relativ einfach herstell- und zusammensetzbar, um einen präzisen Kompass zu ergeben, der von beiden Seiten ablesbar ist.

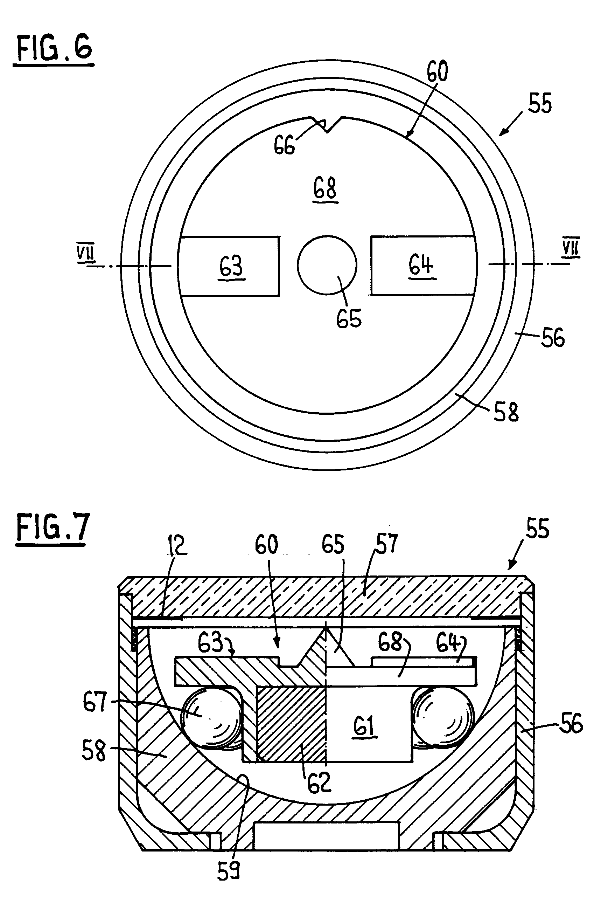

In den Figuren 6 und 7 ist eine einfachere Ausführungsform eines Kompasses dargestellt, dessen bewegliches Teil ebenfalls auf einem Kugelkranz gelagert ist. Der Kompass 55 enthält ein Gehäuse 56 aus amagnetischem Messing, das oben mit einer durchsichtigen Abdeckung 57 abgeschlossen ist. Diese Abdeckung weist, am besten wie bei den übrigen Ausführungsbeispielen von unten aufgedampft, die feste Skala 12 auf. In Figur 6, in welcher der Kompass in der Aufsicht gezeigt wird, ist das Deckglas mit der Skala weggelassen. Im Gehäuse 56 befindet sich ein Einsatz 58 aus Kunststoff, der eine polierte, halbkugelförmige Lauffläche 59 aufweist. Dieser Einsatz wird in das Gehäuse eingepresst und mit diesem verklebt und abgedichtet.

Das bewegliche Teil 60 besteht aus einem ringförmigen Teil 61, in welchem der Magnet 62 eingepasst ist und einer daraufliegenden Scheibe 68, auf welcher die Zeiger 63, respektive 64 angeordnet sind. Dabei können die Zeiger entweder eingelassen oder aufgeklebt oder einfach in der Masse gefärbt sein. Falls notwendig, enthält das Magnetgehäuse auch Vertiefungen, um ein Ausgleichgewicht anzubringen. Die Scheibe weist an ihrer Oberfläche eine konische Erhebung 65 auf, die den Mittelpunkt definiert. Die Kerbe 66 dient Ausrichtungszwecken.

Das bewegliche Teil 60, respektive die Unterseite der überlappenden Scheibe und die Aussenseite des ringförmigen Teils, ruht auf kranzförmig angeordneten Kugeln 67, die einerseits aus einem amagnetischen Material gefertigt sind und andererseits zusammen ein Gewicht ergeben, das grösser als der übrige Teil des Kompasskörpers ist. Damit ist gewährleistet, dass die Kugeln, respektive das bewegliche Teil, stets in der richtigen Lage angeordnet sind. Selbstverständlich müssen dabei die Dimensionen des Magnetgehäuses und der konischen Erhebung in Bezug auf das Deckglas, respektive der Lauffläche derart bemessen sein, dass die Kugeln stets kranzförmig angeordnet bleiben und in keiner Lage eine Kugel entweichen kann.

## Patentansprüche

1. Magnetkompass, der ein Gehäuse (2, 29, 56) und ein bewegliches Teil (3, 33, 60), an dem mindestens eine Zeigeranordnung (4, 34) angebracht ist, aufweist, wobei zwischen dem Gehäuse und dem beweglichen Teil Kugeln (23, 40, 67) angeordnet sind, dadurch gekennzeichnet, dass das bewegliche Teil (3, 33, 60) nur auf mindestens einem Kugelkranz (23; 38; 67) aufliegt, wobei die darin frei beweglichen Kugeln (23, 40, 67) entweder am beweglichen Teil (3, 60) gehalten sind und auf einer mit dem Gehäuse fest verbundenen, konkaven Fläche (10, 59) ablaufen, oder am Gehäuse (29, 56) gehalten sind und auf der konvexen Aussenfläche (54) des beweglichen Teils (33) ablaufen.

2. Magnetkompass nach Anspruch 1, dadurch gekennzeichnet, dass die Zeigeranordnung (4; 34) auf beiden Oberflächen des beweglichen Teils (3, 33) angebracht ist.

3. Magnetkompass nach Anspruch 1 oder 2, dadurch gekennzeichnet, dass das bewegliche Teil (3) mit den Zeigeranordnungen (4) auf einem Kranz von Kugeln (23) gelagert ist, wobei die Kugeln einerseits an der konkaven Innenfläche (10) des ringförmigen Seitenteils (5) und andererseits an der eine V-förmige Nut (24) enthaltenden, konvexen Seite (21) des Magnetgehäuses (16) des scheibenförmigen, beweglichen Teils ablaufen.

4. Magnetkompass nach Anspruch 1 oder 2, dadurch gekennzeichnet, dass das bewegliche Teil (33) mit den Zeigeranordnungen (34) auf zwei Kugel-Kränzen (38, 39) gelagert ist, wobei die Kugeln (40) einerseits an einem Doppelkäfigring (41) mit zwei konkaven Ecken (42) und andererseits an der konvex geformten Seite (54) des scheibenförmigen beweglichen Teils ablaufen.

5. Magnetkompass nach Anspruch 3 oder 4, dadurch gekennzeichnet, dass das Gehäuse (2, 39) zwei aus einem durchsichtigen Material gefertigte Deckscheiben (6, 32) mit eingelegter fester Skala (11, 37) aufweist, die je mittels einer Rippe (8, 35) in einer entsprechenden Nut (7, 36) im ringförmigen Seitenteil (5, 31) befestigt sind.

6. Magnetkompass nach einem der Ansprüche 2 bis 5, dadurch gekennzeichnet, dass sowohl das Gehäuse als auch das bewegliche Teil spiegelsymmetrisch ausgebildete und angeordnete Teile aufweist.

7. Magnetkompass nach einem der Ansprüche 1 bis 6, dadurch gekennzeichnet, dass die Magnetsubstanz (19) quaderförmig ausgebildet und im Magnetgehäuse (16; 43, 44) angeordnet ist.

8. Magnetkompass nach einem der Ansprüche 1 bis 6, dadurch gekennzeichnet, dass die Magnetsubstanz (52) als aufgedampfte und gerichtete Scheibe zwischen den beiden Magnetgehäuse-Hälften angeordnet ist.

9. Magnetkompass nach Anspruch 1 mit einer Zeigeranordnung, dadurch gekennzeichnet, dass das Gehäuse (56) aus einem amagnetischen Material gefertigt ist und einen Kunststoff-Einsatz (58) enthält, der eine halbkugelförmige Lauffläche (59) aufweist, auf der der Kugelkranz (67), auf dem das bewegliche Teil (60) ruht, abläuft.

10. Magnetkompass nach Anspruch 9, dadurch gekennzeichnet, dass das bewegliche Teil (60) im wesentlichen aus einem ringförmigen Teil (61) mit aufgesetzter Scheibe (68) grösseren Durchmessers besteht, wobei die Aussenseite des ringförmigen Teils sowie die Unterseite des hervorstehenden Scheibenteils die andere Lauffläche der Kugeln (67) ergeben und das Innere des ringförmigen Teils die Magnetsubstanz aufnimmt, und die Scheibenoberseite die Zeigeranordnung (63, 64) trägt.

11. Magnetkompass nach Anspruch 9 oder 10, dadurch gekennzeichnet, dass das Gewicht der Kugeln (67) insgesamt grösser ist als das Gewicht der übrigen Teile des Kompasses.

12. Magnetkompass nach einem der Ansprüche 1 bis 11, dadurch gekennzeichnet, dass die Zeigeranordnung nebst den beiden Zeigern und Skalenteilen in ihrer Mitte eine konische Erhebung (17, 65) enthält.

13. Magnetkompass nach einem der Ansprüche 1 bis 12, dadurch gekennzeichnet, dass das bewegliche Teil ausgebildet ist, Gewichtsausgleichszylinder (26) aufzunehmen.

14. Magnetkompass nach einem der Ansprüche 1 bis 13, dadurch gekennzeichnet, dass die Kugeln aus einem amagnetischen Metall gefertigt sind und einen Durchmesser von 1 mm aufweisen.

## Claims

1. Magnetic compass, comprising a housing (2, 29, 56) and a movable part (3, 33, 60) to which at least one pointer arrangement (4, 34) is fastened, balls (23, 40, 67) being disposed between the housing and the movable part, characterised by the fact that the movable part (3, 33, 60) is borne by only at least one ring of balls (23; 38; 67) wherein the freely movable balls (23, 40, 67) are either held at the movable part (3, 60) and run on a concave surface (10, 59) solidly fixed to the housing, or are held at the housing (29, 56) and run on the convex outer surface (54) of the movable part (33).

2. Magnetic compass according to claim 1, characterised by the fact that the pointer arrangement (4; 34) is fastened on both surfaces of the movable part (3, 33).

3. Magnetic compass according to claim 1 or 2, characterised by the fact that the movable part (3) comprising the pointer arrangements (4) is borne on a ring of balls (23), the balls running on the concave inner surface (10) of the ring-shaped lateral piece (5), on the one hand, and on the convex side (21) of the magnet housing (16) of the disk-shaped movable part, said convex side (21) having a V-shaped groove (24), on the other hand.

4. Magnetic compass according to claim 1 or 2, characterised by the fact that the movable part (33) comprising the pointer arrangements (34) is borne on two rings of balls (38, 39), the balls (40) running on a twin cage ring (41) having two concave edges (42), on the one hand, and on the convex shaped side (54) of the disk-shaped movable part.

5. Magnetic compass according to claim 3 or 4, characterised by the fact that the housing (2, 39) comprises two covering disks (6, 32) made of a transparent material and having an inlaid fixed scale (11, 37), said disks being fastened by means of a rib (8, 35) in a corresponding groove (7, 36) of the ring-shaped lateral piece (5, 31).

6. Magnetic compass according to any one of claims 2 to 5, characterised by the fact that the housing as well as the movable part comprise elements which are mirror symmetrically shaped and arranged.

7. Magnetic compass according to any one of claims 1 to 6, characterised by the fact that the magnetic substance (19) is cuboid shaped and disposed within the magnet housing (16; 43, 44).

8. Magnetic compass according to any one of claims 1 to 6, characterised by the fact that the magnetic substance (52) is arranged between the two halves of the magnet housing in the form of a vapour deposited and oriented disk.

9. Magnetic compass according to claim 1, comprising one pointer arrangement, characterised by the fact that the housing (56) is made of a non-magnetic material and contains an insert of synthetic material (58) having a hemispheric running surface (59) on which the ring of balls (67) is running which carries the movable part (60).

10. Magnetic compass according to claim 9, characterised by the fact that the movable part (60) consists essentially of a ring-shaped part (61) having a disk (68) of a greater diameter fitted thereon, the outer side of the ring-shaped part as well as the underside of the protruding area of the disk defining the other running surface of the balls (67), the interior of the ring-shaped part receiving the magnet substance, and the upper side of the disk carrying the pointer arrangement (63, 64).

11. Magnetic compass according to claim 9 or 10, characterised by the fact that the total weight of all balls (67) is greater than the weight of the remaining parts of the compass.

12. Magnetic compass according to any one of claims 1 to 11, characterised by the fact that the pointer arrangement comprising the two pointers and the scale elements presents a conical elevation (17, 65) at its centre.

13. Magnetic compass according to any one of claims 1 to 12, characterised by the fact that the movable part is formed for receiving weight equilibration cylinders (26).

14. Magnetic compass according to any one of claims 1 to 13, characterised by the fact that the balls are made of a non-magnetic material and have a diameter of 1 mm.

## Revendications

1. Boussole magnétique, comprenant un boîtier (2, 29, 56) et une pièce mobile (3, 33, 60) comportant au moins un agencement indicateur (4, 34), des billes (23, 40, 67) étant disposées entre le boîtier et la pièce mobile, caractérisée en ce que la pièce mobile (3, 33, 60) ne s'appuie que sur au moins une couronne de billes (23; 38; 67), les billes (23, 40, 67), pouvant s'y déplacer librement, étant retenues ou bien par la pièce mobile (3, 60) pour se dérouler sur une surface concave (10, 59) fixée au boîtier, ou bien par le boîtier (29, 56) pour se dérouler sur la surface concave extérieure (54) de la pièce mobile (33).

2. Boussole magnétique selon la revendication 1, caractérisée en ce que l'agencement indicateur (4; 34) est fixé sur les deux surfaces de la pièce mobile (3, 33).

3. Boussole magnétique selon la revendication 1 ou 2, caractérisée en ce que la pièce mobile (3) est logée avec les agencements indicateurs (4) sur une couronne de billes (23), ces billes se déroulant sur la surface intérieure concave (10) de la pièce latérale annulaire (5), d'une part, et sur le côté convexe (21) comportant une rainure en forme de V (24) du boîtier d'aimant (16) de la pièce mobile en forme de disque, d'autre part.

4. Boussole magnétique selon la revendication 1 ou 2, caractérisée en ce que la pièce mobile (33) est logée avec les agencements indicateurs (34) sur deux couronnes de billes (38, 39), ces billes (40) se déroulant sur un anneau à cage double (41) ayant deux extrémités concaves (42), d'une part, et sur le côté convexe (54) de la pièce mobile en forme de disque, d'autre part.

5. Boussole magnétique selon la revendication 3 ou 4, caractérisée en ce que le boîtier (2, 39) comprend deux disques de couverture (6, 32) en un matériau transparent et comportant un cadran fixe (11, 37) encastré, ces disques étant fixés par une nervure (8, 35) dans une rainure correspondante (7, 36) de la pièce latérale annulaire (5, 31).

6. Boussole magnétique selon l'une des revendications 2 à 5, caractérisée en ce que et le boîtier et la pièce mobile comportent des éléments formés et arrangés de façon symétrique.

7. Boussole magnétique selon l'une des revendications 1 à 6, caractérisée en ce que le substrat magnétique (19) est sous forme de parallélipipède rectangle et est arrangé dans le boîtier d'aimant (16; 43, 44).

8. Boussole magnétique selon l'une des revendications 1 à 6, caractérisée en ce que le substrat magnétique (52) sous forme de disque déposé sous vide et orienté est arrangé entre les deux moitiés du boîtier d'aimant.

9. Boussole magnétique selon la revendication 1 et comportant un agencement indicateur, caractérisée en ce que le boîtier (56) est fabriqué à partir d'un matériau amagnétique et comporte un insert en matière synthétique (58) comprenant une surface de roulement hémisphérique (59) sur laquelle se déroule la couronne de billes (67) supportant la pièce mobile (60).

10. Boussole magnétique selon la revendication 9, caractérisée en ce que la pièce mobile (60) consiste essentiellement en une partie annulaire (61) comportant un disque (68) ayant un diamètre plus grand, le côté extérieur de la partie annulaire ainsi que le côté inférieur de la partie saillante du disque définissant l'autre surface de roulement des billes (67), l'intérieur de la partie annulaire recueillant la substance magnétique, et la face supérieure du disque portant l'agencement indicateur (63, 64).

11. Boussole magnétique selon la revendication 9 ou 10, caractérisée en ce que le poids total des billes (67) est plus grand que le poids des pièces restantes de la boussole.

12. Boussole magnétique selon l'une des revendications 1 à 11, caractérisée en ce que l'agencement indicateur comporte, en plus des deux aiguilles et des éléments du cadran, une élévation conique en son centre.

13. Boussole magnétique selon l'une des revendications 1 à 12, caractérisée en ce que la pièce mobile est agencée pour recevoir des cylindres d'équilibrage de poids.

14. Boussole magnétique selon l'une des revendications 1 à 13, caractérisée en ce que les billes sont fabriquées à partir d'un matériau amagnétique et présentent un diamètre de 1 mm.
